# EUROPÄISCHE PATENTSCHRIFT

(11) **EP 3 956 573 B1**
(45) Veröffentlichungstag und Bekanntmachung des Hinweises auf die Patenterteilung: **07.06.2023**
(21) Anmeldenummer: 20797040.1
(22) Anmeldetag: 06.10.2020
(51) Int. Cl.: F16B 47/00, F16B 1/00

(54) **VERBINDUNGSVORRICHTUNG ZUM LÖSBAREN VERBINDEN ZWEIER BAUGRUPPEN**
CONNECTING APPARATUS FOR DETACHABLY CONNECTING TWO ASSEMBLIES
APPAREIL DE LIAISON PERMETTANT DE RELIER AMOVIBLES DEUX ENSEMBLES

(30) Priorität: 26.06.2020 DE 102020207983
(43) Veröffentlichungstag der Anmeldung: 23.02.2022
(73) Patentinhaber: Fidlock GmbH, 30659 Hannover (DE)
(72) Erfinder: BLECKAT, Björn, 30167 Hannover (DE); HILLER, Lasse, 30952 Ronnenberg (DE); PANKOKE, Oliver, 31157 Sarstedt (DE); BOTKUS, Breido, 30175 Hannover (DE); FIEDLER, Joachim, 30519 Hannover (DE)
(74) Vertreter: Maikowski & Ninnemann Patentanwälte Partnerschaft mbB
(86) Internationale Anmeldenummer: PCT/EP2020/077998
(87) Internationale Veröffentlichungsnummer: WO 2021/259512

(56) Entgegenhaltungen:
- WO-A2-2019/086648
- BE-A- 890 725
- JP-A- S6 399 506
- US-A1- 2015 212 544
- US-A1- 2018 131 794

## Beschreibung

Die Erfindung betrifft eine Verbindungsvorrichtung zum lösbaren Verbinden zweier Baugruppen nach dem Oberbegriff des Anspruchs 1.

Eine derartige Verbindungsvorrichtung umfasst ein erstes Verbindungsteil, das einer ersten der Baugruppen zugeordnet ist und einen Flächenabschnitt ausbildet, und ein zweites Verbindungsteil, das einer zweiten der Baugruppen zugeordnet ist und ein Unterdruckelement aufweist, das mit dem Flächenabschnitt des ersten Verbindungsteils entlang einer Ansetzrichtung verbindbar ist, in einer verbundenen Stellung an dem Flächenabschnitt anliegt und bei Belastung mit Unterdruckwirkung an dem Flächenabschnitt gehalten ist.

Eine Verbindungsvorrichtung soll vorliegend insbesondere zum Befestigen eines elektronischen Geräts an einer zugeordneten Baugruppe dienen können. So kann die Verbindungsvorrichtung beispielsweise die Befestigung einer Kamera an einem Helm (beispielsweise einem Skihelm oder einem Fahrradhelm) oder auch die Befestigung eines Mobiltelefons oder eines anderen elektronischen Geräts in oder an einer zugeordneten Baugruppe, zum Beispiel an einem Fahrzeug, z.B. an der Windschutzscheibe oder am Armaturenbrett eines Kraftfahrzeugs oder an einer Lenkerstange eines Fahrrads oder Motorrads, ermöglichen.

Wird eine Kamera an einem Helm, beispielsweise einem Skihelm oder einem Fahrradhelm, oder ein Mobiltelefon an einer zugeordneten Baugruppe befestigt, so können bei Gebrauch impulsartige Stoßkräfte wirken, die aufgefangen und abgeleitet werden müssen und insbesondere nicht zu einem Lösen der Kamera oder des Mobiltelefons führen sollen. Eine Verbindungsvorrichtung zum Befestigen eines elektronischen Geräts, beispielsweise einer Kamera oder eines Mobiltelefons, soll daher insbesondere in der Lage sein, kurzzeitig wirkende, impulsartige Stoßkräfte aufzunehmen.

Zum Befestigen ganz unterschiedlicher Baugruppen aneinander, beispielsweise auch zum Befestigen eines elektronischen Geräts in Form eines Mobiltelefons oder Navigationsgeräts in einem Fahrzeug, sind Verbindungsvorrichtungen bekannt, die eine Halterung mittels Unterdruck bereitstellen. So ist aus der US 2013/0323388 A1 eine Verbindungsvorrichtung bekannt, die ein Unterdruckelement in Form eines Saugnapfes verwendet, um ein Mobiltelefon an der Windschutzscheibe eines Fahrzeugs festzulegen. Der Saugnapf wird hierzu an die Windschutzscheibe angesetzt, wobei an dem Saugnapf ein Magnetelement angeordnet ist, das mit einem magnetisch wirkenden Element auf Seiten der Windschutzscheibe zusammenwirken kann, um den Halt an der Windschutzscheibe zu verbessern.

Bei einer aus der US 5,192,043 bekannten Verbindungsvorrichtung zum Befestigen einer Alarmvorrichtung an einer Metallfläche wird eine magnetische Gummifläche an eine Metallfläche angesetzt, wobei bei Ansetzen ein Vakuum entsteht, sodass durch Magnetwirkung zwischen der Gummifläche und der Metallfläche sowie durch Unterdruckkräfte die Alarmvorrichtung an der Metallfläche gehalten wird.

Eine aus der EP 0 689 966 B1 bekannte Verbindungsvorrichtung weist eine magnetische Kontaktplatte auf, an der ein Saugnapf angeordnet ist. Mittels der Verbindungsvorrichtung kann ein Skiträger an einem Fahrzeugdach eines Fahrzeugs befestigt werden.

Solche Verbindungsvorrichtungen sollen zum einen einfach schließbar sein, um eine Verbindung zwischen den zugeordneten Baugruppen herzustellen. Zudem ist aber auch wünschenswert, dass solche Verbindungsvorrichtungen einfach zu öffnen sind, um insbesondere ein ruckartiges Abreißen unter Überwindung eines Unterdrucks und gegebenenfalls zusätzlich einer magnetischen Verbindung zu vermeiden. Insbesondere bei Verwendung zusammen mit einem elektronischen Gerät ist hierbei weiter wünschenswert, dass die Verbindungsvorrichtung platzsparend und einfach unter Verwendung weniger Bauteile ausgestaltet ist.

Aus der WO 2019/086648 A2 ist eine Verbindungsvorrichtung bekannt, bei der ein Verschlussmodul ein Unterdruckelement aufweist, das an eine zugeordnete Ansetzkomponente angesetzt werden kann, um in einer verbundenen Stellung durch Unterdruck mit der Ansetzkomponente zusammenzuwirken. Ein Verstellelement kann verstellt werden, um eine Strömungsöffnung freizugeben, um das Verschlussmodul von der Ansetzkomponente zu lösen.

Aufgabe der vorliegenden Erfindung ist es, eine Verbindungsvorrichtung zur Verfügung zu stellen, die einfach verwendbar, insbesondere einfach zu schließen, aber auch einfach wieder zu öffnen ist, bei vorteilhafter Verbindung der zugeordneten Baugruppen auch bei einer Stoßbelastung und bei einfachem und platzsparendem Aufbau.

Diese Aufgabe wird durch einen Gegenstand mit den Merkmalen des Anspruchs 1 gelöst.

Demnach ist das erste Verbindungsteil in der verbundenen Stellung entlang einer zu der Ansetzrichtung senkrechten Ebene bewegbar zu dem zweiten Verbindungsteil gelagert, wobei durch Bewegen des ersten Verbindungsteils relativ zu dem zweiten Verbindungsteil die Stellung des Unterdruckelements relativ zu dem Flächenabschnitt veränderbar und dadurch die Unterdruckwirkung zum Lösen des ersten Verbindungsteils und des zweiten Verbindungsteils voneinander aufhebbar ist.

Die Verbindungsvorrichtung kann einfach aufgebaut sein. Zudem kann die Verbindungsvorrichtung platzsparend ausgestaltet sein. Dies ermöglicht insbesondere die Verwendung der Verbindungsvorrichtung zum Halten eines elektronischen Geräts, beispielsweise einer Kamera oder eines Mobiltelefons. Beispielweise kann ein Mobiltelefon an einer zugeordneten Baugruppe, zum Beispiel in einem Fahrzeug, befestigt werden, ohne dass die Verbindungsvorrichtung insbesondere axial entlang der Ansetzrichtung wesentlich zum Bauraum beiträgt.

Bei der Verbindungsvorrichtung wird eine Verbindung zwischen den aneinander zu befestigenden Baugruppen dadurch hergestellt, dass die Verbindungsteile entlang einer Ansetzrichtung aneinander angesetzt werden. Beim Ansetzen entsteht ein abgedichteter Raum zwischen dem Unterdruckelement des zweiten Verbindungsteils und dem Flächenabschnitt des ersten Verbindungsteils, sodass die Baugruppen aufgrund einer Unterdruckwirkung aneinander gehalten sind. Solch eine Verbindung kann insbesondere belastbar auf Stoß sein, sodass über die Verbindungsvorrichtung Stoßkräfte aufgefangen und abgeleitet werden können.

Mittels der Verbindungsvorrichtung können beispielsweise eine Kamera an einem Helm oder ein Mobiltelefon an einer zugeordneten Baugruppe, zum Beispiel in oder an einem Fahrzeug, zum Beispiel an einer Windschutzscheibe oder an einem Armaturenbrett eines Kraftfahrzeugs oder an einer Lenkerstange eines Fahrrads oder Motorrads, befestigt werden.

In der verbundenen Stellung der Verbindungsvorrichtung können das Unterdruckelement und der Flächenabschnitt zum Beispiel flächig aneinander anliegen, sodass effektiv kein Raum zwischen dem Unterdruckelement und dem Flächenabschnitt besteht. Bei einer Belastung der Baugruppen relativ zueinander kann jedoch eine Kraft auf das erste Verbindungsteil relativ zu dem zweiten Verbindungsteil wirken, die in Richtung einer Vergrößerung oder Schaffung eines zwischen dem Unterdruckelement und dem Flächenabschnitt gelegenen Raums wirkt, was einen Unterdruck zwischen dem Unterdruckelement und dem Flächenabschnitt bewirkt und somit Haltekräfte erzeugt, die das Unterdruckelement an dem Flächenabschnitt halten und tendenziell größer werden, je stärker die Verbindungsteile relativ zueinander belastet werden. Das erste Verbindungsteil wird somit aufgrund einer Unterdruckwirkung an dem zweiten Verbindungsteil gehalten, wenn die Verbindungsteile aneinander angesetzt sind und eine Belastungskraft zwischen den Verbindungsteilen wirkt.

Das Öffnen der Verbindungsvorrichtung erfolgt dadurch, dass die Verbindungsteile relativ zueinander bewegt werden. Die Bewegung der Verbindungsteile erfolgt tangential zum Flächenabschnitt des ersten Verbindungsteils, nämlich in einer zu der Ansetzrichtung senkrechten Ebene. Durch Bewegung der Verbindungsteile relativ zueinander wird die Lage des Unterdruckelements zu dem Flächenabschnitt verändert, wodurch die Unterdruckwirkung aufgehoben wird und somit die Verbindungsteile voneinander abgenommen werden können.

In der verbundenen Stellung sind die Verbindungsteile derart aneinander gelagert, dass die Verbindungsteile (nur) in definierter Weise zueinander bewegbar sind. Über die Lagerung wird somit insbesondere eine Führung der Verbindungsteile zueinander bereitgestellt, wobei die Bewegung der Verbindungsteile zum Lösen der Verbindungsvorrichtung entlang der zur Ansetzrichtung senkrechten Ebene erfolgt, beispielsweise durch Verdrehen oder Verschieben der Verbindungsteile zueinander.

Eine Führung kann beispielsweise über eine Drehlagerung oder über eine Linearführung, zum Beispiel über eine Langlochführung, entlang einer geradlinigen oder gekrümmten Bewegungsbahn bereitgestellt werden.

Die Führung kann hierbei auch so beschaffen sein, dass das Unterdruckelement und der Flächenabschnitt entlang einer gekrümmten Ebene zueinander beweglich sind, insbesondere wenn der Flächenabschnitt - zum Beispiel bei einem Helm - in sich gekrümmt und das Unterdruckelement entsprechend geformt ist.

In einer Ausgestaltung ist das Unterdruckelement durch ein zumindest abschnittsweise elastisches Napfelement ausgebildet. Das Unterdruckelement verwirklicht somit ein Bauteil nach Art eines elastischen Saugnapfes, das an dem Flächenabschnitt des ersten Verbindungsteils angeordnet werden kann, um unter elastischer Verformung ein Vakuum zwischen dem Unterdruckelement und dem Flächenabschnitt zu bilden und dadurch Haltekräfte zum Halten der Baugruppen aneinander bereitzustellen.

In einer Ausgestaltung ist das Unterdruckelement derart ausgebildet, dass das Unterdruckelement bei einem Bewegen des ersten Verbindungsteils relativ zu dem zweiten Verbindungsteil mit zumindest einem Abschnitt von dem Flächenabschnitt abgeschert wird. Bei einem Bewegen der Verbindungsteile relativ zueinander kommt es zu einer Relativbewegung des Unterdruckelements zu dem Flächenabschnitt. Dadurch kann das Unterdruckelement mit zumindest einem Abschnitt, insbesondere einem Randabschnitt, außer Deckung von dem Flächenabschnitt gebracht werden, sodass Luft in einen Raum zwischen dem Unterdruckelement und dem Flächenabschnitt einströmen kann und somit eine Unterdruckwirkung zwischen dem Unterdruckelement und dem Flächenabschnitt aufgehoben wird. Durch Abscheren des Unterdruckelements von dem Flächenabschnitt wird somit eine durch Unterdruck bewirkte Kraftwirkung zwischen den Verbindungsteilen aufgehoben, sodass die Verbindungsteile voneinander gelöst und die den Verbindungsteilen zugeordneten Baugruppen voneinander abgenommen werden können.

In einer Ausgestaltung weist der Flächenabschnitt eine Unstetigkeit auf. Bei einem Bewegen des ersten Verbindungsteils relativ zu dem zweiten Verbindungsteil wird das Unterdruckelement in Wechselwirkung mit der Unstetigkeit an dem Flächenabschnitt gebracht, und dadurch wird die Unterdruckwirkung zwischen dem Unterdruckelement und dem Flächenabschnitt aufgehoben. Die Unstetigkeit steht in der verbundenen Stellung nicht in Wechselwirkung mit dem Unterdruckelement, sodass die Unstetigkeit den Unterdruck zwischen dem Flächenabschnitt und dem Unterdruckelement nicht beeinträchtigt. Bei Bewegen der Verbindungsteile relativ zueinander wird das Unterdruckelement jedoch in Wechselwirkung mit der Unstetigkeit gebracht, sodass dadurch Luft zwischen das Unterdruckelement und den Flächenabschnitt strömen kann und die Unterdruckwirkung aufgehoben wird.

Die Unstetigkeit kann beispielsweise als Vertiefung an dem Flächenabschnitt geformt sein. Wird das Unterdruckelement bei Bewegen der Verbindungsteile relativ zueinander zu dem Flächenabschnitt verstellt, kann insbesondere ein Randabschnitt des Unterdruckelements in den Bereich der Unstetigkeit gelangen, sodass über die Unstetigkeit Luft zwischen das Unterdruckelement und den Flächenabschnitt strömen kann. Die flächige Anlage des Unterdruckelements an dem Flächenabschnitt wird somit durch die Unstetigkeit unterbrochen, sodass bei Wechselwirken der Unstetigkeit mit dem Unterdruckelement die Unterdruckwirkung aufgehoben wird.

Anstelle einer in den Flächenabschnitt eingeformten Vertiefung kann die Unstetigkeit zum Beispiel durch einen erhabenen Abschnitt, zum Beispiel nach Art eines Stegs oder eines Noppens ausgebildet sein, sodass bei Wechselwirken mit der Unstetigkeit das Unterdruckelement abschnittsweise von dem Flächenabschnitt abgehoben wird und dadurch Luft zwischen das Unterdruckelement und den Flächenabschnitt strömen kann.

In einer Ausgestaltung ist das erste Verbindungsteil in der verbundenen Stellung um eine entlang der Ansetzrichtung gerichtete Drehachse drehbar zu dem zweiten Verbindungsteil gelagert. Die Verbindungsteile können somit, wenn sie aneinander angesetzt und miteinander verbunden sind, um die Drehachse zueinander verdreht werden, sodass durch Verdrehen das Unterdruckelement relativ zu dem Flächenabschnitt verstellt und dadurch die Unterdruckwirkung aufgehoben werden kann.

Eine solche drehbare Lagerung kann beispielsweise über einen Lagerzapfen an einem der Verbindungsteile und eine zugeordnete Lageröffnung an dem anderen der Verbindungsteile gebildet sein. Beispielsweise kann der Lagerzapfen an dem zweiten Verbindungsteil geformt sein, während das erste der Verbindungsteile eine zugeordnete Lageröffnung aufweist, in die der Lagerzapfen in verbundener Stellung der Verbindungsteile eingreift. Über die drehbare Lagerung können die Verbindungsteile somit in definierter Weise zueinander bewegt werden, um die Verbindungsteile aus der verbundenen Stellung zu lösen.

In einer Ausgestaltung ist das Unterdruckelement mit Bezug auf die Drehachse nicht rotationssymmetrisch ausgebildet. Das Unterdruckelement ist somit, betrachtet entlang der zur Ansetzrichtung senkrechten Ebene, nicht kreisrund geformt, sondern weist eine von einer kreisrunden Form abweichende Formgebung auf. Beispielsweise kann das Unterdruckelement mehreckig, zum Beispiel rechteckig oder quadratisch, geformt sein. Bei einem Verstellen des Unterdruckelements zu dem Flächenabschnitt können somit Abschnitte des Unterdruckelements außer Deckung von dem Flächenabschnitt gebracht werden, sodass dadurch Luft zwischen das Unterdruckelement und den Flächenabschnitt strömen kann und die Unterdruckwirkung zwischen dem Unterdruckelement und dem Flächenabschnitt aufgehoben wird.

Zusätzlich oder alternativ kann das Unterdruckelement exzentrisch zu der Drehachse angeordnet sein. Aufgrund der exzentrischen Anordnung des Unterdruckelements kann wiederum ein Abschnitt des Unterdruckelements durch Verdrehen des Unterdruckelements relativ zu dem Flächenabschnitt um die Drehachse außer Deckung von dem Flächenabschnitt gebracht werden, sodass dadurch Luft zwischen das Unterdruckelement und den Flächenabschnitt strömen kann und die Unterdruckwirkung zwischen dem Unterdruckelement und dem Flächenabschnitt aufgehoben ist.

Bei einer solchen exzentrischen Anordnung kann das Unterdruckelement auch rotationssymmetrisch geformt sein und somit, betrachtet entlang der zur Ansetzrichtung senkrechten Ebene, eine kreisrunde Form aufweisen. Aufgrund der Exzentrizität in der Anordnung zu der Drehachse kann ein Randabschnitt des Unterdruckelements von dem Flächenabschnitt abgeschert werden, wenn das Unterdruckelement zu dem Flächenabschnitt um die Drehachse verdreht wird, sodass dadurch die Unterdruckwirkung aufgehoben werden kann.

In einer Ausgestaltung weist das erste Verbindungsteil zumindest ein erstes Magnetelement und das zweite Verbindungsteil zumindest ein zweites Magnetelement auf. Das zumindest eine erste Magnetelement und das zumindest eine zweite Magnetelement wirken in der verbundenen Stellung magnetisch anziehend zusammen, sodass die Verbindungsteile zusätzlich zur Unterdruckwirkung magnetisch durch Magnetwirkung zwischen den Magnetelementen aneinander gehalten sind.

Die Magnetelemente des ersten Verbindungsteils einerseits und des zweiten Verbindungsteils andererseits dienen dazu, beim Ansetzen der Verbindungsteile aneinander eine magnetische Anziehungskraft bereitzustellen, sodass die Herstellung des Unterdrucks in magnetisch unterstützter Weise (vorzugsweise selbsttätig) erfolgt. Bei Ansetzen werden die Verbindungsteile aufgrund der magnetischen Wechselwirkung magnetisch anziehend zueinander hingezogen, sodass ein (Beinahe-)Vakuum zwischen dem Unterdruckelement und dem Flächenabschnitt bewirkt wird, indem das zum Beispiel als elastisches Napfelement ausgebildete Unterdruckelement gegen den Flächenabschnitt des ersten Verbindungsteils gepresst wird.

Das zumindest eine erste Magnetelement und das zumindest eine zweite Magnetelement können jeweils durch einen Permanentmagneten oder auch eine Anordnung von mehreren Permanentmagneten gebildet sein und wirken zum Schließen der Verbindungsvorrichtung magnetisch anziehend zusammen, indem sie mit ungleichnamigen Magnetpolen aufeinander zu weisen. Denkbar ist aber auch, dass ein Magnetelement durch einen Permanentmagneten oder eine Anordnung von mehreren Permanentmagneten gebildet ist, während das andere Magnetelement durch einen magnetischen Anker aus einem ferromagnetischen Material gebildet ist.

In einer Ausgestaltung werden das zumindest eine erste Magnetelement des ersten Verbindungsteils und das zumindest eine zweite Magnetelement des zweiten Verbindungsteils relativ zueinander verstellt, wenn das erste Verbindungsteil und das zweite Verbindungsteil zum Lösen der Verbindungsteile zueinander bewegt werden. Durch das Verstellen der Magnetelemente relativ zueinander kann eine magnetische Anziehungskraft zwischen den Magnetelementen abgeschwächt werden, indem die Magnetelemente außer Deckung voneinander gebracht werden.

Werden bei einem Bewegen der Verbindungsteile relativ zueinander zum Öffnen der Verbindungsvorrichtung gleichnamige Magnetpole einander angenähert, kann das Trennen der Verbindungsteile voneinander sogar magnetisch unterstützt werden, indem eine magnetische Abstoßungskraft zwischen den Magnetelementen bewirkt wird und die Verbindungsteile somit voneinander abgestoßen werden.

In einer Ausgestaltung weist das erste Verbindungsteil mehrere entlang der zur Ansetzrichtung senkrechten Ebene verteilte, erste Magnetelemente auf. Die Magnetelemente sind somit entlang des Flächenabschnitts des ersten Verbindungsteils versetzt zueinander angeordnet, wobei einem jeden der ersten Magnetelemente des ersten Verbindungsteils beispielsweise ein zweites Magnetelement des zweiten Verbindungsteils zugeordnet sein kann. Die ersten Magnetelemente und die zweiten Magnetelemente wirken bei Ansetzen der Verbindungsteile aneinander und auch in der verbundenen Stellung der Verbindungsteile magnetisch anziehend zusammen, sodass die Verbindungsteile magnetisch aneinander gehalten sind. Durch Bewegen der Verbindungsteile relativ zueinander können die Magnetelemente außer Deckung voneinander gebracht werden, sodass die Magnetwirkung zwischen den Magnetelementen zumindest abgeschwächt wird und die Verbindungsteile somit in einfacher Weise voneinander gelöst werden können.

Denkbar ist, in einer Ausgestaltung, dass beispielsweise an dem ersten Verbindungsteil mehrere erste Magnetelemente in Form von Permanentmagneten angeordnet sind, während an dem zweiten Verbindungsteil beispielsweise ein zweites Magnetelement in Form eines ferromagnetischen Ankers, zum Beispiel in Form einer ferromagnetischen Platte gebildet ist. Die Magnetelemente des ersten Verbindungsteils wirken magnetisch anziehend mit dem ferromagnetischen Magnetelement des zweiten Verbindungsteils zusammen, um in der verbundenen Stellung einen magnetischen Halt zwischen den Verbindungsteilen zu bewirken und das Unterdruckelement in Anlage mit dem Flächenabschnitt zu halten.

In einer Ausgestaltung ist das zumindest eine erste Magnetelement und/oder das zumindest eine zweite Magnetelement, betrachtet entlang der zur Ansetzrichtung senkrechten Ebene, außerhalb des Unterdruckelements angeordnet. Das erste Magnetelement und/oder das zweite Magnetelement wirken somit räumlich entfernt von dem Unterdruckelement, um eine magnetische Anziehungskraft zwischen den Verbindungsteilen in der verbundenen Stellung bereitzustellen.

In einer Ausgestaltung sind das erste Magnetelement und/oder das zweite Magnetelement (jeweils) durch einen ringförmigen Permanentmagneten gebildet. Das erste Magnetelement und/oder das zweite Magnetelement erstrecken sich somit ringförmig um die Ansetzrichtung, wobei das erste Magnetelement und das zweite Magnetelement sich beim Ansetzen der Verbindungsteile aneinander magnetisch anziehend gegenüberstehen und das Verbinden somit magnetisch unterstützen. Durch ringförmige Ausgestaltung kann eine Positionierung der Verbindungsteile zueinander beim Ansetzen erleichtert werden. Insbesondere wenn sowohl das erste Magnetelement als auch das zweite Magnetelement jeweils durch einen ringförmigen Permanentmagneten gebildet sind, ermöglichen die Magnetelemente eine selbsttätige Positionierung der Verbindungsteile zueinander in einer Ebene quer zur Ansetzrichtung, sodass die Verbindungsteile zum Verbinden der Baugruppen lagerichtig miteinander in Anlage gebracht werden können.

Durch Ausbildung des ersten Magnetelements und/oder des zweiten Magnetelements durch (je) einen ringförmigen Permanentmagneten ergibt sich eine vorteilhafte Positionierwirkung dadurch, dass ein vergleichsweise geringer Querversatz zwischen den Magnetelementen eine vergleichsweise große magnetische Querkraft zwischen den Magnetelementen bewirkt. Weil die Überdeckung in radialer Richtung über eine vergleichsweise kleine Strecke (entsprechend der radialen Dicke der ringförmigen Permanentmagnete) erfolgt, ist die Kraftänderung bei Versatz der Magnetelemente radial zueinander vergleichsweise groß, was bewirkt, dass die Magnetelemente bei einem Versatz aufgrund der magnetischen Anziehungskräfte selbsttätig so positioniert werden, dass sie in Querrichtung in Deckung zueinander sind und sich somit überdeckend gegenüberliegen.

Sind das erste Magnetelement und/oder das zweite Magnetelement ringförmig ausgebildet, können das erste Magnetelement und/oder das zweite Magnetelement ringförmig geschlossen oder auch an einer oder mehreren Stellen umfänglich geöffnet sein. Im Querschnitt können das erste Magnetelement und/oder das zweite Magnetelement hierbei rund, insbesondere kreisförmig, oder mehreckig, zum Beispiel viereckig, ausgebildet sein.

In einer Ausgestaltung weist die Verbindungsvorrichtung eine Verriegelungseinrichtung zum Verriegeln einer tangentialen Bewegung des ersten Verbindungsteils und des zweiten Verbindungsteils relativ zueinander entlang der zur Ansetzrichtung senkrechten Ebene auf. Die Verriegelungseinrichtung ist beispielsweise betätigbar, um das erste Verbindungsteil und das zweite Verbindungsteil entlang der zur Ansetzrichtung senkrechten Ebene relativ zueinander zu bewegen, um das erste Verbindungsteil und das zweite Verbindungsteil voneinander zu lösen. Die Verriegelungseinrichtung dient dazu, eine tangentiale Bewegung der Verbindungsteile relativ zueinander entlang der zur Ansetzrichtung senkrechten Ebene zu sperren, wenn sich die Verriegelungseinrichtung in einer verriegelnden Stellung befindet. Ein unbeabsichtigtes Öffnen der Verbindungsvorrichtung wird somit verhindert, solange die Verriegelungseinrichtung eine Bewegung der Verbindungsteile zueinander sperrt. Beispielsweise durch Betätigen der Verriegelungseinrichtung kann die Verriegelung aufgehoben werden, sodass die Verbindungsteile entlang der zur Ansetzrichtung senkrechten Ebene zueinander bewegt werden können und somit das Unterdruckelement zu dem Flächenabschnitt verstellt werden kann, um die Unterdruckwirkung zwischen dem Unterdruckelement und dem Flächenabschnitt aufzuheben.

Eine solche Verriegelungseinrichtung kann beispielsweise durch einen Verriegelungsstift an einem der Verbindungsteile gebildet sein, der in einer verriegelnden Stellung in eine zugeordnete Verriegelungsöffnung an dem anderen der Verbindungsteile eingreift und betätigt werden kann, um die Verriegelung aufzuheben.

Die Verriegelung kann alternativ zum Beispiel durch ein Rastelement nach Art eines Noppens oder dergleichen gebildet sein, das in einer verriegelnden Stellung mit einer zugeordneten Rastöffnung (formschlüssig) in Eingriff steht. Eine Entriegelung kann hierbei dadurch erfolgen, dass eine hinreichend große Kraft zwischen den Verbindungsteilen ausgeübt wird, beispielsweise eine Kraft, die eine vorbestimmte Grenzkraft übersteigt und die bewirkt, dass das Rastelement aus einem rastenden Eingriff mit der Rastöffnung gelangt.

Die Grenzkraft kann zum Beispiel durch die anziehende Kraft der Magnetelemente eingestellt werden, die das Rastelement in Eingriff mit der Rastöffnung hält. Beim Lösen läuft das Rastelement auf eine Begrenzungskante der Rastöffnung auf, sodass das Rastelement entgegen der magnetischen Anziehungskraft außer Eingriff von der Rastöffnung gelangt. Die hierfür erforderliche Kraft wird durch die magnetische Anziehung im Zusammenspiel mit der Formgebung des Rastelements und der Rastöffnung eingestellt.

Alternativ kann die Grenzkraft aber auch zum Beispiel durch ein mechanisches Federelement eingestellt werden, das beim Lösen der Verriegelungseinrichtung ausgelenkt wird und beispielsweise das Rastelement vorspannt.

Die Verbindungsvorrichtung ist beispielsweise dazu ausgebildet, ein elektronisches Gerät an einer zugeordneten Baugruppe zu befestigen. Beispielsweise kann die Verbindungsvorrichtung dazu dienen, eine Kamera an einem Helm, zum Beispiel einem Skihelm oder einem Fahrradhelm, zu befestigen. In anderer Ausgestaltung kann die Verbindungsvorrichtung auch dazu dienen, ein Mobiltelefon oder eine Navigationsgerät oder ein anderes elektronisches Kommunikations- oder Informationsgerät zum Beispiel in oder an einem Fahrzeug zu befestigen, beispielsweise an einer Windschutzscheibe oder an einem Armaturenbrett eines Kraftfahrzeugs oder an einer Lenkerstange eines Fahrrads oder Motorrads.

Der der Erfindung zugrunde liegende Gedanke soll nachfolgend anhand der in den Figuren dargestellten Ausführungsbeispiele näher erläutert werden. Es zeigen:
- Fig. 1A: eine Ansicht eines Ausführungsbeispiels einer Verbindungsvorrichtung, mit einem ersten Verbindungsteil und einem zweiten Verbindungsteil, die entlang einer Ansetzrichtung aneinander ansetzbar sind;
- Fig. 1B: eine teiltransparente Ansicht der Anordnung gemäß Fig. 1A;
- Fig. 2A: eine schematische Ansicht einer Verbindungsvorrichtung, in einer verbundenen Stellung zweier Verbindungsteile;
- Fig. 2B: eine Ansicht der Verbindungsteile, in einer zueinander verdrehten Stellungen;
- Fig. 3A: eine Ansicht eines anderen Ausführungsbeispiels einer Verbindungsvorrichtung, in einer verbundenen Stellung zweier Verbindungsteile;
- Fig. 3B: eine Ansicht der Verbindungsteile in einer relativ zueinander verdrehten Stellungen;
- Fig. 4A: eine Ansicht eines weiteren Ausführungsbeispiels einer Verbindungsvorrichtung, in einer verbundenen Stellung zweier Verbindungsteile;
- Fig. 4B: eine Ansicht der Verbindungsteile in einer relativ zueinander verdrehten Stellungen;
- Fig. 5A: eine Ansicht eines wiederum anderen Ausführungsbeispiels einer Verbindungsvorrichtung, in einer verbundenen Stellung zweier Verbindungsteile;
- Fig. 5B: eine Ansicht der Verbindungsteile, in einer relativ zueinander verdrehten Stellung; und
- Fig. 6: eine Ansicht eines Ausführungsbeispiels einer Verriegelungseinrichtung zum Verriegeln der Verbindungsteile in der verbundenen Stellung.

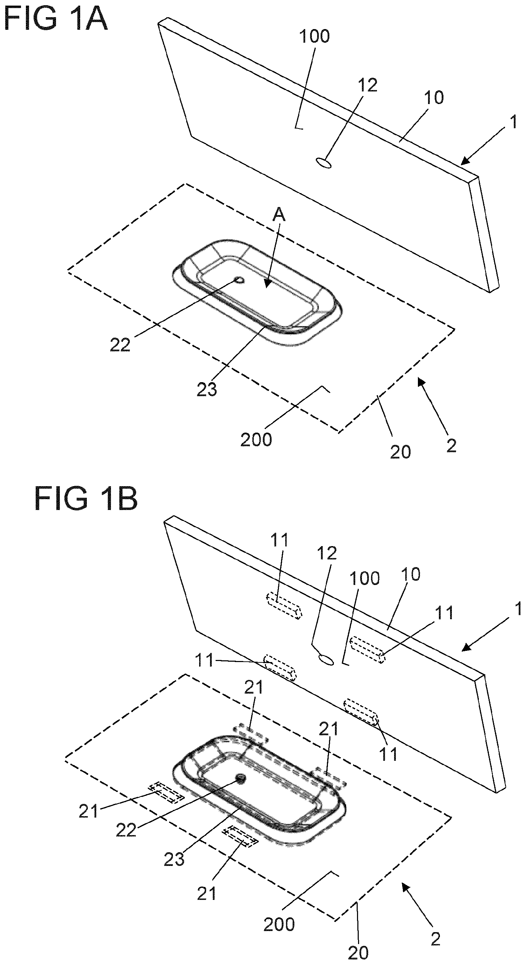

Fig. 1A, 1B zeigen Ansichten eines Ausführungsbeispiels einer Verbindungsvorrichtung, die zum Verbinden zweier Baugruppen 1, 2 miteinander dient. Eine erste Baugruppe 1, zum Beispiel ein elektronisches Gerät in Form eines Mobiltelefons oder dergleichen, ist hierbei einem ersten Verbindungsteil 10 der Verbindungsvorrichtung zugeordnet, während eine zweite Baugruppe 2 einem zweiten Verbindungsteil 20 der Verbindungsvorrichtung zugeordnet ist.

Das erste Verbindungsteil 10 kann beispielsweise als Hüllelement, zum Beispiel als Handyhülle, ausgebildet sein, in der die erste Baugruppe 1 aufgenommen werden kann. Das erste Verbindungsteil 10 bildet einen Flächenabschnitt 100 aus, der bei bestimmungsgemäßer Verwendung der Verbindungsvorrichtung dem zweiten Verbindungsteil 20 zugewandt ist und an das zweite Verbindungsrads 20 angesetzt werden kann.

Das zweite Verbindungsteil 20 weist einen Körper 200 auf, an dem ein Unterdruckelement 23 angeordnet ist. Das Unterdruckelement 23 weist die Gestalt eines elastisch verformbaren Napfelements auf, das aus einem elastischen Material, zum Beispiel einem Silikonmaterial oder dergleichen, geformt ist und fest mit dem Körper 200 verbunden ist.

Zum Verbinden der Verbindungsteile 10, 20 miteinander können die Verbindungsteile 10, 20 entlang einer Ansetzrichtung A aneinander angesetzt werden. Beim Ansetzen gelangt das Unterdruckelement 23 des Verbindungsteils 20 in Anlage mit dem Flächenabschnitt 100 des Verbindungsteils 10, wobei beim Ansetzen das Unterdruckelement 23 elastisch verformt wird und ein (Beinahe-)Vakuum zwischen dem Unterdruckelement 23 und dem Flächenabschnitt 100 entsteht.

In einer verbundenen Stellung wirkt somit ein Unterdruck zwischen den Verbindungsteilen 10, 20, aufgrund dessen die Verbindungsteile 10, 20 aneinander gehalten sind.

Bei dem in Fig. 1A, 1B dargestellten Ausführungsbeispiel weist jedes der Verbindungsteile 10, 20 eine Mehrzahl von Magnetelementen 11, 21 auf, die beim Ansetzen der Verbindungsteile 10, 20 aneinander magnetisch anziehend zusammenwirken derart, dass die Verbindungsteile 10, 20 magnetisch zueinander hin gezogen werden und somit das Ansetzen des Unterdruckelements 23 an den Flächenabschnitt 100 zur Bereitstellung der Unterdruckwirkung magnetisch unterstützt wird.

In der verbundenen Stellung werden die Verbindungsteile 10, 20 zum einen durch Unterdruckwirkung zwischen dem Unterdruckelement 23 und dem Flächenabschnitt 100 und zudem durch magnetische Wirkung zwischen den Magnetelementen 11, 21 aneinander gehalten.

Beim Ansetzen der Verbindungsteile 10, 20 aneinander gelangt ein Lagerelement 22 in Form eines Lagerzapfens an dem Verbindungsteil 20 in Eingriff mit einem Lagerelement 12 in Form einer Lageröffnung an dem Flächenabschnitt 100. In der verbundenen Stellung sind die Verbindungsteile 10, 20 über die Lagerelemente 12, 22 um eine entlang der Ansetzrichtung A gerichtete Drehachse drehbar zueinander gelagert.

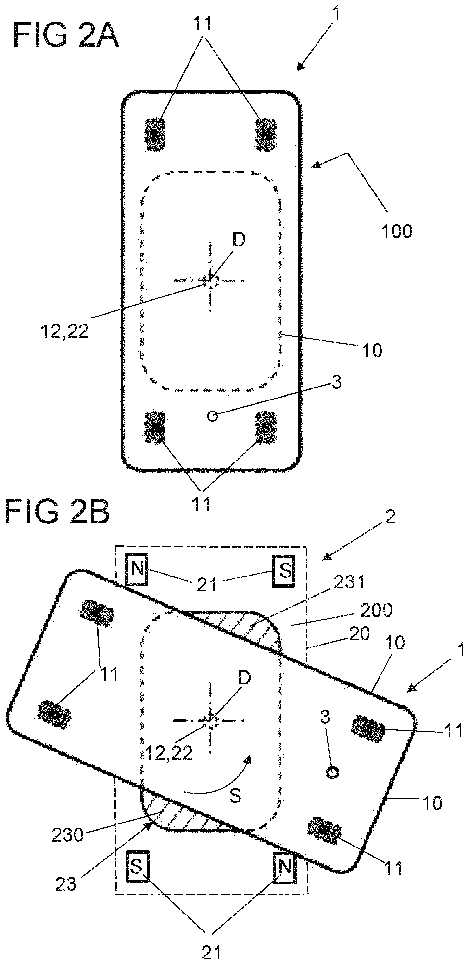

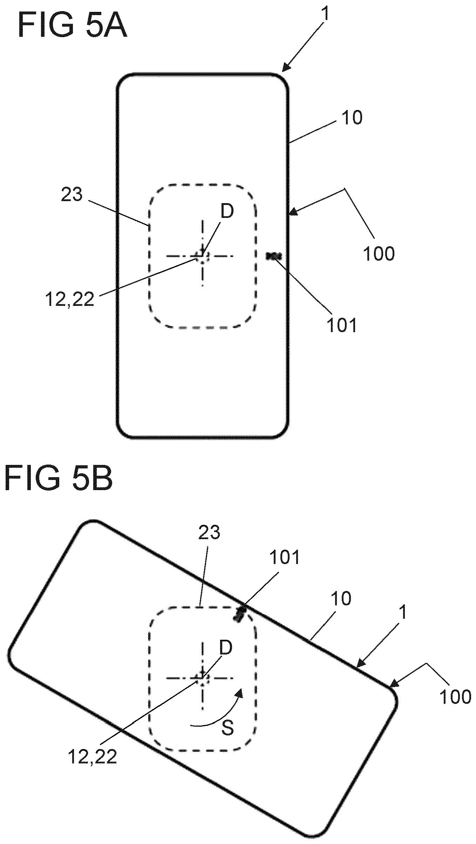

Wie dies nachfolgend anhand der Ausführungsbeispiele gemäß Fig. 2A, 2B bis 5A, 5B noch erläutert werden soll, kann durch die bewegbare Lagerung der Verbindungsteile 10, 20 aneinander ein leichtgängiges Öffnen der Verbindungsvorrichtung ermöglicht werden. So können die Verbindungsteile 10, 20 zum Öffnen der Verbindungsvorrichtung zueinander verdreht werden, wodurch das Unterdruckelement 23 an dem Flächenabschnitt 100 verstellt und teilweise außer Deckung von dem Flächenabschnitt 100 gebracht wird, sodass Luft zwischen das Unterdruckelement 23 und den Flächenabschnitt 100 strömen kann und somit die Unterdruckwirkung zwischen dem Unterdruckelement 23 und dem Flächenabschnitt 100 aufgehoben wird.

Mittels der Verbindungsvorrichtung wird somit in der verbundenen Stellung, aufgrund der Unterdruckwirkung und der magnetischen Anziehung der Magnetelemente 11, 21, ein fester Halt, insbesondere auch gegenüber einer Stoßbelastung, geschaffen. Die Verbindungsvorrichtung ermöglicht zudem ein leichtes, bedienungsfreundliches Öffnen durch Bewegen der Verbindungsteile 10, 20 relativ zueinander, wobei das Bewegen der Verbindungsteile 10, 20 relativ zueinander zum einen dazu führt, dass die Unterdruckwirkung aufgehoben wird, und zum anderen auch bewirkt, dass die Magnetelemente 11, 21 des Verbindungsteils 10 einerseits und des Verbindungsteils 20 andererseits außer Deckung voneinander gebracht werden, sodass auch eine magnetische Anziehungskraft zwischen den Verbindungsteilen 10, 20 abgeschwächt wird und die Verbindungsteile 10, 20 somit einfach und im Wesentlichen kraftlos voneinander abgenommen werden können.

Der Öffnungsvorgang der Verbindungsvorrichtung ist anhand eines Ausführungsbeispiels in Fig. 2A, 2B dargestellt, wobei das in Fig. 2A, 2B dargestellte Ausführungsbeispiel funktional dem Ausführungsbeispiel gemäß Fig. 1A, 1B entspricht.

In der verbundenen Stellung, dargestellt in Fig. 2A, liegt das Unterdruckelement 23 des Verbindungsteils 20 flächig an dem Flächenabschnitt 100 des Verbindungsteils 10 an, wobei - bei Anliegen einer Belastungskraft - ein (Beinahe-)Vakuum zwischen dem Unterdruckelement 23 und dem Flächenabschnitt 100 entsteht und somit ein Unterdruck zwischen den Verbindungsteilen 10, 20 wirkt. Zudem sind Magnetelemente 11, 21 der Verbindungsteile 10, 20 paarweise in einer magnetisch anziehenden Gegenüberlage, sodass die Verbindungsteile 10, 20 auch magnetisch aneinander gehalten sind.

Bei dem in Fig. 1A, 1B und Fig. 2A, 2B dargestellten Ausführungsbeispiel weist das Unterdruckelement 23, in einer zur Ansetzrichtung A senkrechten Ebene, eine im Wesentlichen rechteckige Form auf. Das Unterdruckelement 23 ist somit, mit Bezug zu einer durch die Lagerung der Lagerelemente 12, 22 definierten Drehachse D, nicht rotationssymmetrisch ausgebildet.

Bei einem Verdrehen der Verbindungsteile 10, 20 relativ zueinander entlang einer Schwenkrichtung S um die Drehachse D, wie dies in Fig. 2B dargestellt ist, wird das Unterdruckelement 23 an dem Flächenabschnitt 100 verstellt, sodass das Unterdruckelement 23 teilweise außer Deckung von dem Flächenabschnitt 100 gelangt. So sind bei der in Fig. 2B dargestellten Drehstellung Abschnitte 230, 231 des Unterdruckelements 23 nicht mehr in flächiger Anlage an dem Flächenabschnitt 100, sodass das Unterdruckelement 23 teilweise von dem Flächenabschnitt 100 abgeschert ist und somit Luft zwischen das Unterdruckelement 23 und den Flächenabschnitt 100 strömen kann.

In der in Fig. 2B dargestellten Drehstellung ist die Unterdruckwirkung zwischen dem Flächenabschnitt 100 und dem Unterdruckelement 23 und somit zwischen den Verbindungsteilen 10, 20 somit aufgehoben. Zudem sind die Magnetelemente 11, 21 zueinander verdreht und somit nicht mehr in einer paarweisen Gegenüberlage zueinander, sodass die magnetische Anziehung zwischen den Verbindungsteilen 10, 20 abgeschwächt oder gar in eine Abstoßung umgekehrt ist.

In der in Fig. 2B dargestellten Drehstellung können die Verbindungsseite 10, 20 somit voneinander abgenommen werden, ohne dass dazu ein großer Kraftaufwand erforderlich ist.

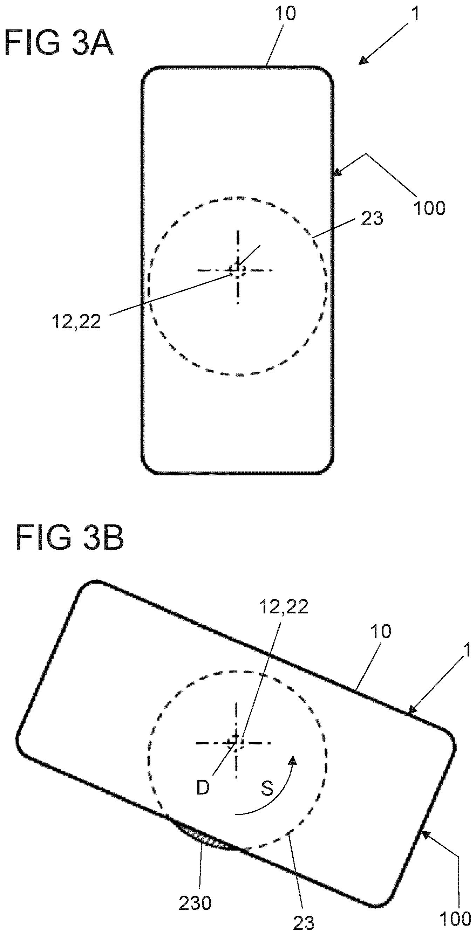

Bei einem in Fig. 3A, 3B dargestellten Ausführungsbeispiel ist das Unterdruckelement 23, betrachtet entlang einer zur Ansetzrichtung A senkrechten Ebene, kreisrund und somit rotationssymmetrisch geformt. Die Drehachse D, die durch die Lagerelemente 12, 22 definiert ist, ist jedoch exzentrisch zu dem Unterdruckelement 23 angeordnet, was bewirkt, dass bei einem Verdrehen der Verbindungsteile 10, 20 relativ zueinander das Unterdruckelement 23 mit einem Randabschnitt 230 von dem Flächenabschnitt 100 abgeschert wird, wie dies aus Fig. 3B ersichtlich ist.

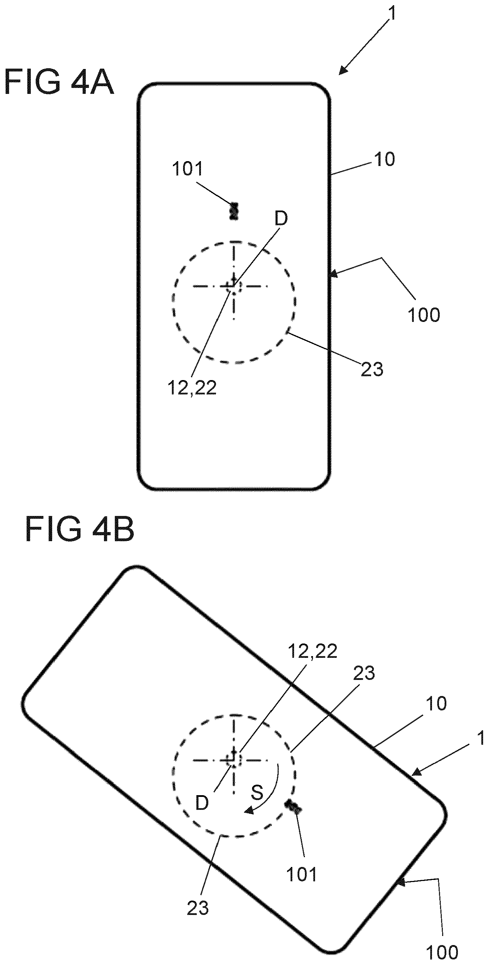

Bei einem in Fig. 4A, 4B dargestellten Ausführungsbeispiel ist das Unterdruckelement 23 analog dem Ausführungsbeispiel gemäß Fig. 3A, 3B kreisrund geformt und exzentrisch zur Drehachse D angeordnet, wobei bei einem Verdrehen der Verbindungsteile 10, 20 relativ zueinander das Unterdruckelement 23 jedoch nicht von dem Flächenabschnitt 100 abgeschert wird, sondern mit einem Randabschnitt in Wechselwirkung mit einer an dem Flächenabschnitt 100 geformten Unstetigkeit 101, zum Beispiel in Form einer Vertiefung oder einer Erhebung, gebracht wird. Aufgrund der Wechselwirkung mit der Unstetigkeit 101 wird ein Strömungsweg in einen Raum zwischen dem Flächenabschnitt 100 und dem Unterdruckelement 23 geöffnet, sodass Luft zwischen das Unterdruckelement 23 und den Flächenabschnitt 100 strömen kann und somit eine Unterdruckwirkung zwischen dem Unterdruckelement 23 und dem Flächenabschnitt 100 aufgehoben wird.

Ist die Unstetigkeit 101 als in den Flächenabschnitt 100 eingeformte Vertiefung geformt, so wird über die Unstetigkeit 101 in der Stellung gemäß Fig. 4B ein Strömungsweg nach Art eines Bypasses geöffnet.

Ist die Unstetigkeit 1 als Erhebung geformt, so wird durch Wechselwirkung mit der Unstetigkeit das Unterdruckelement 23 teilweise von dem Flächenabschnitt 100 abgehoben, sodass wiederum ein Strömungsweg unter das Unterdruckelement 23 geöffnet wird.

Das Ausführungsbeispiel gemäß Fig. 5A, 5B entspricht funktional dem Ausführungsbeispiel gemäß Fig. 4A, 4B, indem an dem Flächenabschnitt 100 eine Unstetigkeit 101 in Form einer Vertiefung oder einer Erhebung geformt ist, die bei einem Verdrehen der Verbindungsteile 10, 20 mit dem Unterdruckelement 23 wechselwirkt. Bei dem Ausführungsbeispiel gemäß Fig. 5A, 5B ist hierbei das Unterdruckelement 23, im Gegensatz zum Ausführungsbeispiel gemäß Fig. 4A, 4B, nicht kreisrund geformt, sondern weist eine rechteckige Grundform auf. Bei einem Verdrehen der Verbindungsteile 10, 20 zueinander gelangt das Unterdruckelement 23 jedoch ganz analog wie bei dem Ausführungsbeispiel gemäß Fig. 4A, 4B mit einem Randabschnitt in Wechselwirkung mit der Unstetigkeit 101, sodass ein Strömungsweg unter das Unterdruckelement 23 geöffnet und somit eine Unterdruckwirkung aufgehoben wird.

Bei sämtlichen der vorangehend anhand von Fig. 2A, 2B bis 5A, 5B beschriebenen Ausführungsbeispielen wird durch Verdrehen der Verbindungsteile 10, 20 die Unterdruckwirkung zwischen den Verbindungsteilen 10, 20 aufgehoben, wobei zudem, wie für das Ausführungsbeispiel gemäß Fig. 2A, 2B beschrieben, eine magnetische Wirkung zwischen Magnetelementen der Verbindungsteile 10, 20 (die zur verbesserten Übersichtlichkeit in Fig. 3A, 3B bis 5A, 5B nicht dargestellt sind) abgeschwächt wird.

Bei sämtlichen der vorangehend beschriebenen Ausführungsbeispiele kann die Verbindungsvorrichtung einfach unter Verwendung weniger Bauteilen aufgebaut sein. Es ergibt sich eine kostengünstige Fertigung. Zudem kann die Verbindungsvorrichtung platzsparend aufgebaut sein, insbesondere entlang der Ansetzrichtung A, sodass insbesondere in verbundener Stellung der Verbindungsteile 10, 20 die Verbindungsvorrichtung nicht nennenswert zum erforderlichen axialen Bauraum beiträgt.

Bei dem in Fig. 2A, 2B dargestellten Ausführungsbeispiel ist schematisch eine Verriegelungseinrichtung 3 eingezeichnet, die zum Verriegeln der Verbindungsteile 10, 20 in der verbundenen Stellung gemäß Fig. 2A dient und die Verbindungsteile 10, 20 in der verbundenen Stellung so zueinander sperrt, dass die Verbindungsteile 10, 20 nicht ohne weiteres, jedenfalls nicht ohne Überwindung der Verriegelung, zueinander verdreht werden können.

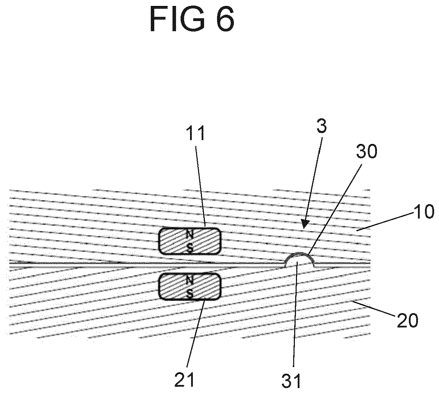

Ein Ausführungsbeispiel einer solchen Verriegelungseinrichtung 3 ist in Fig. 6 dargestellt. Die Verriegelungseinrichtung 3 ist hierbei durch Verriegelungselemente 30, 31 verwirklicht, nämlich ein Verriegelungselement 31 in Form eines Verriegelungsnoppens an dem Verbindungsteil 20, das in einer verriegelnden Stellung mit einem Verriegelungselement 30 in Form einer Verriegelungsöffnung an dem Verbindungsteil 10 in verriegelndem Eingriff steht.

Der Eingriff ist hierbei so beschaffen, dass die Verriegelung durch hinreichende Kraftwirkung zwischen den Verbindungsteilen 10, 20 aufgehoben werden kann. Dazu ist das Verrieglungselement 31 als abgerundeter Noppen geformt, sodass bei hinreichender Kraftwirkung das Verriegelungselement 31 aus der Verriegelungsöffnung 30 gleiten und somit außer Eingriff von der zugeordneten Verriegelungsöffnung 30 gelangen kann.

In alternativer Ausgestaltung kann die Verriegelungseinrichtung 3 auch derart ausgestaltet sein, dass die Verriegelungseinrichtung 3 zu betätigen ist, um die Verriegelung zu lösen. Beispielsweise kann die Verriegelungseinrichtung 3 einen Verriegelungsstift aufweisen, der zum Lösen der Verriegelung außer Eingriff von einer zugeordneten Verriegelungsöffnung zu bringen ist, um ein Verdrehen der Verbindungsteile 10, 20 zu ermöglichen.

Der der Erfindung zugrunde liegende Gedanke ist nicht auf die vorangehend geschilderten Ausführungsbeispiele beschränkt, sondern lässt sich grundsätzlich auch in gänzlich andersgearteter Weise verwirklichen.

Insbesondere sind ganz unterschiedliche Elemente, die zum Bereitstellen von Unterdruckkräften zusammenwirken, denkbar und möglich. Insofern sind die vorangehend geschilderten Ausführungsformen nur beispielhaft zu verstehen.

Eine Verbindungsvorrichtung der hier beschriebenen Art kann zum Befestigen ganz unterschiedlicher Baugruppen aneinander dienen. Insbesondere ist die Verbindungsvorrichtung in ihrer Verwendung nicht auf die hier gezeigten Beispiele beschränkt. Vorteilhaft kann die Verbindungsvorrichtung zum Befestigen elektronischer Geräte, zum Beispiel einer Kamera oder eines Mobiltelefons, verwendet werden. Dies ist jedoch nicht beschränkend.

Zum Beispiel kann die Verbindungsvorrichtung auch als Verschluss, zum Bespiel für ein Gurtband, verwendet werden.

### Bezugszeichenliste

- 1: Baugruppe (elektronisches Gerät)
- 10: Verbindungsteil (Handyhülle)
- 100: Flächenabschnitt
- 101: Unstetigkeit (Strömungsöffnung)
- 11: Magnetelement
- 12: Lagereinrichtung (Lagerzapfen)
- 2: Baugruppe (Halterung)
- 20: Verbindungsteil
- 200: Körper
- 21: Magnetelement
- 22: Lagereinrichtung (Lagerzapfen)
- 23: Unterdruckelement
- 230,231: Abschnitt
- 3: Verriegelungseinrichtung
- 30,31: Verriegelungselemente
- A: Ansetzrichtung
- D: Drehachse
- S: Schwenkrichtung

## Patentansprüche

1. Verbindungsvorrichtung zum lösbaren Verbinden zweier Baugruppen (1, 2), mit
einem ersten Verbindungsteil (10), das einer ersten der Baugruppen (1, 2) zugeordnet ist und einen Flächenabschnitt (100) ausbildet, und
einem zweiten Verbindungsteil (20), das einer zweiten der Baugruppen (1, 2) zugeordnet ist und ein Unterdruckelement (23) aufweist, das mit dem Flächenabschnitt (100) des ersten Verbindungsteils (10) entlang einer Ansetzrichtung (A) verbindbar ist und in einer verbundenen Stellung an dem Flächenabschnitt (100) anliegt und bei Belastung mit Unterdruckwirkung an dem Flächenabschnitt (100) gehalten ist,
**dadurch gekennzeichnet,**
**dass** das erste Verbindungsteil (10) in der verbundenen Stellung entlang einer zu der Ansetzrichtung (A) senkrechten Ebene bewegbar zu dem zweiten Verbindungsteil (20) gelagert ist, wobei durch Bewegen des ersten Verbindungsteils (10) relativ zu dem zweiten Verbindungsteil (20) die Stellung des Unterdruckelements (23) relativ zu dem Flächenabschnitt (100) veränderbar und dadurch die Unterdruckwirkung zum Lösen des ersten Verbindungsteils (10) und des zweiten Verbindungsteils (20) voneinander aufhebbar ist.

2. Verbindungsvorrichtung nach Anspruch 1, **dadurch gekennzeichnet, dass** das Unterdruckelement (23) durch ein zumindest abschnittsweise elastisches Napfelement ausgebildet ist.

3. Verbindungsvorrichtung nach Anspruch 1 oder 2, **dadurch gekennzeichnet, dass** das Unterdruckelement (23) derart ausgebildet ist, dass das Unterdruckelement (23) bei einem Bewegen des ersten Verbindungsteils (10) relativ zu dem zweiten Verbindungsteil (20) mit zumindest einem Abschnitt (230, 231) von dem Flächenabschnitt (100) abgeschert wird.

4. Verbindungsvorrichtung nach einem der vorangehenden Ansprüche, **dadurch gekennzeichnet, dass** der Flächenabschnitt (100) eine Unstetigkeit (101) aufweist, wobei das Unterdruckelement (23) bei einem Bewegen des ersten Verbindungsteils (10) relativ zu dem zweiten Verbindungsteil (20) in Wechselwirkung mit der Unstetigkeit (101) an dem Flächenabschnitt (100) bringbar und dadurch die Unterdruckwirkung aufhebbar ist.

5. Verbindungsvorrichtung nach Anspruch 4, **dadurch gekennzeichnet, dass** die Unstetigkeit (101) als Vertiefung an dem Flächenabschnitt (100) geformt ist.

6. Verbindungsvorrichtung nach einem der vorangehenden Ansprüche, **dadurch gekennzeichnet, dass** das erste Verbindungsteil (10) in der verbundenen Stellung um eine entlang der Ansetzrichtung (A) gerichtete Drehachse (D) drehbar zu dem zweiten Verbindungsteil (20) gelagert ist.

7. Verbindungsvorrichtung nach Anspruch 6, **dadurch gekennzeichnet, dass** eines der Verbindungsteile (10, 20) einen Lagerzapfen (22) und das andere der Verbindungsteile (10, 20) eine Lageröffnung (12) zum drehbaren Lagern des Lagerzapfens (22) aufweist.

8. Verbindungsvorrichtung nach Anspruch 6 oder 7, **dadurch gekennzeichnet, dass** das Unterdruckelement (23), mit Bezug auf die Drehachse (D), nicht rotationssymmetrisch ausgebildet ist.

9. Verbindungsvorrichtung nach einem der Ansprüche 6 bis 8, **dadurch gekennzeichnet, dass** das Unterdruckelement (23) exzentrisch zu der Drehachse (D) angeordnet ist.

10. Verbindungsvorrichtung nach einem der vorangehenden Ansprüche, **dadurch gekennzeichnet, dass** das erste Verbindungsteil (1) zumindest ein erstes Magnetelement (11) und das zweite Verbindungsteil (20) zumindest ein zweites Magnetelement (21) aufweisen, wobei das zumindest eine erste Magnetelement (11) und das zumindest eine zweite Magnetelement (21) in der verbundenen Stellung magnetisch anziehend zusammenwirken.

11. Verbindungsvorrichtung nach Anspruch 10, **dadurch gekennzeichnet, dass** bei einem Bewegen des ersten Verbindungsteils (10) und des zweiten Verbindungsteils (20) relativ zueinander, zum Lösen des ersten Verbindungsteils (10) und des zweiten Verbindungsteils (21) voneinander, das zumindest eine erste Magnetelement (11) und das zumindest eine zweite Magnetelement (21) relativ zueinander verstellt werden und dadurch eine magnetische Anziehungskraft zwischen dem zumindest einen ersten Magnetelement (11) und dem zumindest einen zweiten Magnetelement (21) abgeschwächt wird.

12. Verbindungsvorrichtung nach Anspruch 10 oder 11, **dadurch gekennzeichnet, dass** das erste Verbindungsteil (10) mehrere entlang der zur Ansetzrichtung (A) senkrechten Ebene verteilte, erste Magnetelemente (11) aufweist.

13. Verbindungsvorrichtung nach Anspruch 12, **dadurch gekennzeichnet, dass** das zweite Verbindungsteil (20) mehrere jeweils einem der ersten Magnetelemente (11) zugeordnete, zweite Magnetelemente (21) aufweist.

14. Verbindungsvorrichtung nach einem der Ansprüche 10 bis 13, **dadurch gekennzeichnet, dass** das zumindest eine erste Magnetelement (11) und/oder das zumindest eine zweite Magnetelement (21), betrachtet entlang der zur Ansetzrichtung (A) senkrechten Ebene, außerhalb des Unterdruckelements (23) angeordnet ist.

15. Verbindungsvorrichtung nach einem der Ansprüche 10 bis 14, **dadurch gekennzeichnet, dass** das zumindest eine erste Magnetelement (11) und/oder das zumindest eine zweite Magnetelement (21) durch einen ringförmigen Permanentmagneten gebildet ist.

16. Verbindungsvorrichtung nach einem der vorangehenden Ansprüche, **gekennzeichnet durch** eine Verrieglungseinrichtung (3) zum Verriegeln der tangentialen Bewegung des ersten Verbindungsteils (1) und des zweiten Verbindungsteils (2) relativ zueinander entlang der senkrecht zur Ansetzrichtung (A) gerichteten Ebene.

17. Verbindungsvorrichtung nach Anspruch 16, **dadurch gekennzeichnet, dass** die Verrieglungseinrichtung (3) betätigbar ist, um das erste Verbindungsteil (1) und das zweite Verbindungsteil (2) entlang der zur Ansetzrichtung (A) senkrechten Ebene relativ zueinander zu bewegen, um das erste Verbindungsteil (1) und das zweite Verbindungsteil (2) voneinander zu lösen.

18. Elektronisches Gerät, mit einer Verbindungsvorrichtung nach einem der vorangehenden Ansprüche.

## Claims

1. Connecting device for releasably connecting two functional groups (1, 2), having
a first connecting part (10) which is assigned to a first of the functional groups (1, 2) and configures an area portion (100); and
a second connecting part (20) which is assigned to a second of the functional groups (1, 2) and has a vacuum element (23) which along a fitting direction (A) is connectable to the area portion (100) of the first connecting part (10) and in a connected position bears on the area portion (100) and, when stressed by the effect of a vacuum, is held on the area portion (100),
**characterized in that**
the first connecting part (10) in the connected position is mounted in relation to the second connecting part (20) so as to be movable along a plane perpendicular to the fitting direction (A) wherein, by moving the first connecting part (10) relative to the second connecting part (20), the position of the vacuum element (23) relative to the area portion (100) is variable and, as a result thereof, the vacuum effect is able to be canceled in order for the first connecting part (10) and the second connecting part (20) to be released from one another.

2. Connecting device according to Claim 1, **characterized in that** the vacuum element (23) is configured by a cup element which is elastic at least in portions.

3. Connecting device according to Claim 1 or 2, **characterized in that** the vacuum element (23) is configured in such a manner that, when moving the first connecting part (10) relative to the second connecting part (20), the vacuum element (23) by way of at least one portion (230, 231) is sheared off from the area portion (100).

4. Connecting device according to one of the preceding claims, **characterized in that** the area portion (100) has an inconsistency (101) wherein, when moving the first connecting part (10) relative to the second connecting part (20), the vacuum element (23) can be brought to interact with the inconsistency (101) on the area portion (100) and, as a result thereof, the vacuum effect is able to be canceled.

5. Connecting device according to Claim 4, **characterized in that** the inconsistency (101) is molded as a depression on the area portion (100).

6. Connecting device according to one of the preceding claims, **characterized in that** the first connecting part (10) in the connected position is mounted so as to be rotatable in relation to the second connecting part (20) about a rotation axis (D) that is aligned along the fitting direction (A).

7. Connecting device according to Claim 6, **characterized in that** one of the connecting parts (10, 20) has a bearing journal (22) and the other of the connecting parts (10, 20) has a bearing opening (12) for rotatably mounting the bearing journal (22).

8. Connecting device according to Claim 6 or 7, **characterized in that** the vacuum element (23) is configured so as not to be rotationally symmetrical in terms of the rotation axis (D).

9. Connecting device according to one of Claims 6 to 8, **characterized in that** the vacuum element (23) is disposed so as to be eccentric in relation to the rotation axis (D).

10. Connecting device according to one of the preceding claims, **characterized in that** the first connecting part (1) has at least one first magnetic element (11), and the second connecting part (20) has at least one second magnetic element (21), wherein the at least one first magnetic element (11) and the at least one second magnetic element (21) in the connected position interact in a magnetically attractive manner.

11. Connecting device according to Claim 10, **characterized in that** when moving the first connecting part (10) and the second connecting part (20) relative to one another for releasing the first connecting part (10) and the second connecting part (21) from one another, the at least one first magnetic element (11) and the at least one second magnetic element (21) are adjusted relative to one another and, as a result thereof, a magnetic pull between the at least one first magnetic element (11) and the at least one second magnetic element (21) is weakened.

12. Connecting device according to Claim 10 or 11, **characterized in that** the first connecting part (10) has a plurality of first magnetic elements (11) which are distributed along the plane perpendicular to the fitting direction (A).

13. Connecting device according to Claim 12, **characterized in that** the second connecting part (20) has a plurality of second magnetic elements (21) which are in each case assigned to one of the first magnetic elements (11).

14. Connecting device according to one of Claims 10 to 13, **characterized in that** the at least one first magnetic element (11) and/or the at least one second magnetic element (21), when viewed along the plane perpendicular to the fitting direction (A), are disposed outside the vacuum element (23).

15. Connecting device according to one of Claims 10 to 14, **characterized in that** the at least one first magnetic element (11) and/or the at least one second magnetic element (21) are/is formed by an annular permanent magnet.

16. Connecting device according to one of the preceding claims, **characterized by** a locking installation (3) for locking the tangential movement of the first connecting part (1) and of the second connecting part (2) relative to one another along the plane directed perpendicular to the fitting direction (A).

17. Connecting device according to Claim 16, **characterized in that** the locking installation (3) is activatable for moving the first connecting part (1) and the second connecting part (2) relative to one another along the plane perpendicular to the fitting direction (A) so as to release the first connecting part (1) and the second connecting part (2) from one another.

18. Electronic apparatus having a connecting device according to one of the preceding claims.

## Revendications

1. Dispositif de liaison pour la liaison libérable de deux ensembles (1, 2), avec
une première partie de liaison (10), qui est associée à un premier des ensembles (1, 2) et réalise une section de surface (100), et
une deuxième partie de liaison (20), qui est associée à un deuxième des ensembles (1, 2) et présente un élément à vide (23), qui peut être relié à la section de surface (100) de la première partie de liaison (10) le long d'une direction de fixation (A) et dans une position reliée s'applique contre la section de surface (100) et lors d'une sollicitation avec action de vide est retenu sur la section de surface (100),
**caractérisé en ce**
**que** la première partie de liaison (10) dans la position reliée est montée de manière à pouvoir se mouvoir par rapport à la deuxième partie de liaison (20) le long d'un plan perpendiculaire à la direction de fixation (A), dans lequel par mouvement de la première partie de liaison (10) par rapport à la deuxième partie de liaison (20) la position de l'élément à vide (23) par rapport à la section de surface (100) peut être modifiée et ainsi l'action de vide peut être supprimée pour détacher la première partie de liaison (10) et la deuxième partie de liaison (20) l'une de l'autre.

2. Dispositif de liaison selon la revendication 1, **caractérisé en ce que** l'élément à vide (23) est réalisé par un élément de godet élastique au moins sur certaines sections.

3. Dispositif de liaison selon la revendication 1 ou 2, **caractérisé en ce que** l'élément à vide (23) est réalisé de telle sorte que l'élément à vide (23) lors d'un mouvement de la première partie de liaison (10) par rapport à la deuxième partie de liaison (20) est détaché avec au moins une section (230, 231) de la section de surface (100).

4. Dispositif de liaison selon l'une quelconque des revendications précédentes, **caractérisé en ce que** la section de surface (100) présente une discontinuité (101), dans lequel l'élément à vide (23) lors d'un mouvement de la première partie de liaison (10) par rapport à la deuxième partie de liaison (20) peut être amené en interaction avec la discontinuité (101) sur la section de surface (100) et ainsi l'action de vide peut être supprimée.

5. Dispositif de liaison selon la revendication 4, **caractérisé en ce que** la discontinuité (101) est formée en tant qu'évidement sur la section de surface (100).

6. Dispositif de liaison selon l'une quelconque des revendications précédentes, **caractérisé en ce que** la première partie de liaison (10) dans la position reliée est montée par rapport à la deuxième partie de liaison (20) de manière à pouvoir tourner autour d'un axe de rotation (D) dirigé le long de la direction de fixation (A).

7. Dispositif de liaison selon la revendication 6, **caractérisé en ce qu'**une des parties de liaison (10, 20) présente un tourillon de montage (22) et l'autre des parties de liaison (10, 20) une ouverture de montage (12) pour le montage rotatif du tourillon de montage (22).

8. Dispositif de liaison selon la revendication 6 ou 7, **caractérisé en ce que** l'élément à vide (23), par rapport à l'axe de rotation (D), n'est pas réalisé avec une symétrie de rotation.

9. Dispositif de liaison selon l'une quelconque des revendications 6 à 8, **caractérisé en ce que** l'élément à vide (23) est disposé de manière excentrée par rapport à l'axe de rotation (D).

10. Dispositif de liaison selon l'une quelconque des revendications précédentes, **caractérisé en ce que** la première partie de liaison (1) présente au moins un premier élément magnétique (11) et la deuxième partie de liaison (20) au moins un deuxième élément magnétique (21), dans lequel le au moins un premier élément magnétique (11) et le au moins un deuxième élément magnétique (21) coopèrent de manière à s'attirer magnétiquement dans la position reliée.

11. Dispositif de liaison selon la revendication 10, **caractérisé en ce que** lors d'un mouvement de la première partie de liaison (10) et de la deuxième partie de liaison (20) l'une par rapport à l'autre, pour détacher la première partie de liaison (10) et la deuxième partie de liaison (21) l'une de l'autre, le au moins un premier élément magnétique (11) et le au moins un deuxième élément magnétique (21) sont déplacés l'un par rapport à l'autre et ainsi une force d'attraction magnétique entre le au moins un premier élément magnétique (11) et le au moins un deuxième élément magnétique (21) est affaiblie.

12. Dispositif de liaison selon la revendication 10 ou 11, **caractérisé en ce que** la première partie de liaison (10) présente plusieurs premiers éléments magnétiques (11) répartis le long du plan perpendiculaire à la direction de fixation (A).

13. Dispositif de liaison selon la revendication 12, **caractérisé en ce que** la deuxième partie de liaison (20) présente plusieurs deuxièmes éléments magnétiques (21) associés respectivement à l'un des premiers éléments magnétiques (11).

14. Dispositif de liaison selon l'une quelconque des revendications 10 à 13, **caractérisé en ce que** le au moins un premier élément magnétique (11) et/ou le au moins un deuxième élément magnétique (21), observés le long du plan perpendiculaire à la direction de fixation (A), est disposé à l'extérieur de l'élément à vide (23).

15. Dispositif de liaison selon l'une quelconque des revendications 10 à 14, **caractérisé en ce que** le au moins un premier élément magnétique (11) et/ou le au moins un deuxième élément magnétique (21) est formé par un aimant permanent annulaire.

16. Dispositif de liaison selon l'une quelconque des revendications précédentes, **caractérisé par** un système de verrouillage (3) pour verrouiller le mouvement tangentiel de la première partie de liaison (1) et de la deuxième partie de liaison (2) l'une par rapport à l'autre le long du plan dirigé perpendiculairement à la direction de fixation (A).

17. Dispositif de liaison selon la revendication 16, **caractérisé en ce que** le système de verrouillage (3) peut être actionné, afin de faire se mouvoir la première partie de liaison (1) et la deuxième partie de liaison (2) l'une par rapport à l'autre le long du plan perpendiculaire à la direction de fixation (A), afin de détacher la première partie de liaison (1) et la deuxième partie de liaison (2) l'une de l'autre.

18. Appareil électronique, avec un dispositif de liaison selon l'une quelconque des revendications précédentes
